# EUROPEAN PATENT APPLICATION

(11) **EP 4 830 987 A1**
(43) Date of publication of application: **28.10.2026**
(21) Application number: 25172718.6
(22) Date of filing: 25.04.2025
(51) Int. Cl.: B60N 2/02, B60N 2/16, B60N 2/18, B60N 2/30

(54) **SUPPORT ASSEMBLY FOR A SEAT IN A VEHICLE, SEAT, VEHICLE, AND METHOD FOR ARRANGING THE SUPPORT ASSEMBLY**

(71) Applicant: Volvo Car Corporation, 405 31 Göteborg (SE)
(72) Inventor: NORDLUND, Andreas, 40531 Göteborg (SE); MODH, Lars, 40531 Göteborg (SE)
(74) Representative: Kransell & Wennborg KB

(57) **Abstract**

The disclosure relates to a support assembly (20) for a seat (11) in a vehicle (10). The support assembly (20) comprising a base component (50) mountable on a vehicle structure (51). The support assembly (20) further comprises a seat support part (30) attachable to a leg support base (31) of the seat (11). The base component (50) and the seat support part (30) are coupled by at least two link arms (40a, 40b, 40c, 40d)Respective first ends of the at least two link arms (40a, 40b, 40c, 40d) are pivotably connected to the base component (50), and respective second ends are pivotably and translatably connected to the seat support part (30). Alternatively, respective first ends of the at least two link arms (40a, 40b, 40c, 40d) are pivotably connected to the seat support part (30), and respective second ends are pivotably and translatably connected to the base component (50). The first and second ends are pivotable about respective axes parallel to the longitudinal axis of the direction of the seat. The disclosure further relates to a seat (11), a vehicle (10), and a method for arranging the support assembly (20).

## Description

### TECHNICAL FIELD

The present disclosure relates to a support assembly for a seat in a vehicle.

The present disclosure also relates to a seat assembly.

The present disclosure further relates to a vehicle.

Further, the present disclosure relates to a method for arranging the support assembly.

### BACKGROUND ART

Reducing the roofline height of a vehicle improves the aerodynamics of the vehicle by that the frontal area of the vehicle can be reduced, in turn leading to reduced air resistance. This in turn leads to improved fuel or battery efficiency. The roofline height is designed considering the expected sitting height of an occupant, which is largely affected by a clearance between a vehicle floor and a leg support base of a seat in which the occupant sits. Conventionally, the clearance is limited by a seat support assembly for supporting and adjusting the seat position. Thus, there is a need to improve such seat support assembly.

### SUMMARY

It is an objective of the present disclosure to improve a support assembly for a seat in a vehicle.

The problem is at least partially solved or alleviated by the subject matter of the independent claims of the present disclosure, wherein further examples are incorporated in the dependent claims.

According to a first aspect, there is provided a support assembly for a seat in a vehicle. The support assembly comprising a base component mountable on a vehicle structure. The support assembly further comprises a seat support part attachable to a leg support base of the seat. The base component and the seat support part are coupled by at least two link arms, SE:TOP
according to one of the two following ways. A first way comprises: respective first ends of the at least two link arms are pivotably connected to the base component. Also, the respective first ends are pivotable about a first axis extending in parallel to a longitudinal direction of the seat, and respective second ends are pivotably and translatably connected to the seat support part. Further, the respective second ends are pivotable about a second axis extending in parallel to a longitudinal direction of the seat and translatable along a direction parallel to a lateral direction of the seat, such that a distance between the base component and the seat support part is adjustable by pivoting the at least two link arms. Alternatively, A second way comprises: respective first ends of the at least two link arms are pivotably connected to the seat support part. Also, the respective first ends are pivotable about a first axis extending in parallel to a longitudinal direction of the seat, and respective second ends are pivotably and translatably connected to the base component. Further, the respective second ends are pivotable about a second axis extending in parallel to a longitudinal direction of the seat and translatable along a direction parallel to a lateral direction of the seat, such that a distance between the base component and the seat support part is adjustable by pivoting the at least two link arms.

The vehicle may comprise a chassis or a vehicle body frame, and a floor panel connected thereto. Any one or more of such components providing a structural integrity of the vehicle may be considered as the vehicle structure. That is, for instance, the support assembly according to the first aspect may be mounted on or fastened to the floor panel of the vehicle. The vehicle may also comprise a seat, where the seat comprises a leg support base on which a vehicle occupant's legs, specifically hamstrings of the legs, are supported, or on which a vehicle occupant sits. Such leg support base may comprise a seat base skeleton and a base cushion between such skeleton and the occupant's legs. The seat support part of the support assembly may be fastened to such base skeleton. The seat may additionally or alternatively comprise a backrest for providing support to the occupant's back, and on which the back of an occupant may rest. The longitudinal direction of the seat may be defined as an axis extending from the backrest to the farthest side of the leg support base across the leg support base. Consequently, when an occupant sits in the seat with the backrest with the occupant's back facing the backrest, the longitudinal axis may comprise forward and backward directions from the perspective of the occupant. The seat may be installed in an interior of the vehicle, such that the longitudinal direction of the seat is aligned with a longitudinal direction of a vehicle direction. The longitudinal axis of the vehicle may be an axis parallel to the direction of straight travel of the vehicle, or simply a forward and backward direction. The surface of the backrest facing an occupant may be facing either the forward or backward direction of the vehicle. A lateral direction of the seat may be an axis normal to the longitudinal direction, and normal to a vertical direction of the seat.

The link arms may couple, i.e., mechanically connect, the base component to the seat support part. The coupling according to the first way may allow a rotational movement the link arms at a first end thereof about a first axis extending in the longitudinal direction of the seat with respect to the base component, and may allow a lateral movement in the lateral direction of the seat and a rotational movement at a second end thereof about a second axis extending in the longitudinal direction of the seat with respect to the seat support part. The combined movements allow for a relative displacement between the base component and the seat support part. The same is valid for the coupling according to the second way. That is, the coupling according to the first way may allow a rotational movement of the link arms at a first end thereof about a first axis extending in the longitudinal direction of the seat with respect to the seat support part, and may allow a lateral movement in the lateral direction of the seat and a rotational movement at a second end thereof about a second axis extending in the longitudinal direction of the seat with respect to the base component. The combined movements allow for a relative displacement between the base component and the seat support part. The coupling according to the first way may be considered as an inverted way with respect to the second way, and vice versa. Specifically, from the first way to the second way, the point where the link arms are pivotable initially comprised in the base component is shifted to the seat support part, while the point where the link arms are pivotable and translatable initially comprised in the seat support part is shifted to the base component.

The first and second axes may be defined with respect to the components of the support assembly. For instance, the base component may occupy a space with a base plane running therethrough, and similarly the seat support part may occupy a space with a seat support plane running therethrough. The base plane may be parallel to the seat support plane. The first and second axes may be parallel to any vector in the base plane or the seat support plane. The base component and/or the seat support part may be arranged onto, fastened to, or installed to an object such that the first and second axes are aligned with axes of the object. For instance, the seat support part may be attached to the leg support base of a seat such that the first and second axes are parallel to the longitudinal direction of the seat. Such seat assembly, i.e., the seat with the seat support part attached thereto in the aligned manner, may be arranged in the vehicle by mounting the base component on a vehicle structure such that the first and second axes are parallel to the longitudinal direction of the vehicle.

An end of a link arm may refer to a part or portion of the link arm comprising a physical end point of the link arm, i.e., the point farthest away along an axis through the link arm from a center point on the axis. For instance, the link arm may be cylindrically shaped with an axial axis running through a base of the link arm, in which case an end is an intersection between the axial axis and the base. The portion or part may start from the end point of the link arm and stretch to the other end of the link arm, e.g., in a continuous manner along the axis through the link arm and/or in a homogenous manner through the plane having a normal being a tangent to the axis. A link arm may be arbitrarily divided into at least two portions with a first portion of the at least two portions comprising one end point of the link arm and a second portion of the at least two portions comprising the other end point of the link arm. The first and second portions may be referred to as ends of a link arm. The main body portion of a link arm, i.e., the portion of the link arm interconnecting the ends, may be of any form or shape. For instance, the main body portion may be substantially rectangular, triangular, or circular rod. A link arm may comprise layers for reinforced mechanical stability. A link arm may be made of at least one of carbon fiber composite, steel, Aluminium Alloys, etc for improved mechanical properties such as stiffness, strength, toughness, shear modulus, etc.

The base component and/or the seat support part may be of substantially planar form or occupy a substantially rectangular space. The base component and/or the seat support may comprise a pivotably coupling grove, protrusion, groove, hook, ring, etc in or on such planar form or space. The base component and/or the seat support may be made of at least one of carbon fiber composite, steel, Aluminium Alloys, etc for improved mechanical properties such as stiffness, strength, toughness, shear modulus, etc.

The support assembly according to the first aspect of the present disclosure orients the axes of the rotation of the link arms along the longitudinal direction of the seat. Such orientation enables the link arms to be advantageously positioned between the base component and the seat support part, thereby improving the packaging efficiency of the support assembly. When such support assembly is attached to the seat, and such seat assembly is to be packaged into a vehicle, such improved packaging efficiency of the seat assembly may in turn advantageously simplify the assembly process including the loading of the seat assembly into the vehicle. Further, improved packing efficiency may advantageously allow the door opening to be lower for fitting the seat assembly in the vehicle, which in turn may advantageously reduce the height of a ceiling of the vehicle, which in turn improves the aerodynamics leading to a reduced fuel consumption of the vehicle.

In an example, specifically in case the base component and the seat support part are coupled by the at least two link arms according to the first way, the base component comprises a first rail mechanism comprising a first base rail mountable on the vehicle structure and a first movable rail slidably supported on the first base rail. The base component further comprises a second rail mechanism comprising a second base rail mountable on the vehicle structure and a second movable rail slidably supported on the second base rail. The second base rail extends in parallel to the first base rail. The second movable rail extends in parallel to the first movable rail. Further, the respective first ends of the at least two link arms are pivotably connected to the first movable rail and the second movable rail, respectively.

The first and/or second rail mechanism may be made of at least one of carbon fiber composite, steel, Aluminium Alloys, etc for improved mechanical properties such as stiffness, strength, toughness, shear modulus, etc.

The seat support part of the support assembly may be attached to the seat such that the first base rail extends in parallel to the longitudinal direction of the seat, and/or the second base rail extends in parallel to the longitudinal direction of the seat. Additionally or alternatively, the base component of the support assembly may be mounted on the vehicle structure such that the first base rail extends in parallel to the longitudinal direction of the vehicle, and/or the second base rail extends in parallel to the longitudinal direction of the vehicle. Additionally or alternatively, the first and second movable rails may be slidable, or slidably movable, along the respective first and second base rails. When the first and second base rails are mounted to the vehicle structured such that the longitudinal direction of the first and second base rails is aligned with the longitudinal direction of the vehicle, the base component allows a forward or backward translation of the seat support part along the longitudinal direction of the vehicle. Additionally or alternatively, the respective first ends of the at least two arms pivotably connected to the first and second movable rails, where the rotational axis of such pivot points extend parallel to the longitudinal direction of the seat, specifically enables the link arms to be compactly packaged between the base component and the seat support part, whilst allowing a relative displacement between the seat support part and the base component. Additionally or alternatively, the rotational axis aligned in parallel to the axis along which the relative displacement occurs may advantageously reduce the dependence between the rotational movement and the relative displacement.

In an example, specifically in case the base component and the seat support part are coupled by the at least two link arms according to the first way, the base component further comprises a lateral support beam extending in the lateral direction of the seat. The respective ends of the lateral support beam are fastened to the first movable rail and the second movable rail, respectively.

The lateral support beam may be of any form or shape. For instance, the lateral support beam may be substantially rectangular, triangular, or circular rod. The lateral support beam may comprise layers for reinforced mechanical stability. The lateral support beam may be made of at least one of carbon fiber composite, steel, Aluminium Alloys, etc for improved mechanical properties such as stiffness, strength, toughness, shear modulus, etc.

A lateral support beam may also be referred to herein as a laterally supporting beam. A beam may also be referred to as a brace, a support, a shaft, a plank, a piece, or others. The respective ends of the lateral support beam may alternatively be fastened to first and second pivoting bolt, or rod, used to pivotably connect the respective first ends of the at least two link arms to the first and second moving rails, respectively. Such lateral supporting beam may provide mechanical support in the lateral direction to which the at least two link arms are pivotably connected, thereby providing mechanical stability and reducing a rotational friction experienced during the pivoting caused by otherwise potentially non-negligible rotational movement of the first and second moving rails. Thus, the seat support assembly according to the example above may advantageously achieve, among others, improving mechanical stability in the lateral direction of the seat.

In an example, specifically in case the base component and the seat support part are coupled by the at least two link arms according to the first way, the seat support part further comprises at least one actuatable module comprising two translatable arms with respective arm ends. The two translatable arms are translatable in the lateral direction of the seat. The at least one actuatable module is attachable to the leg support base of the seat. Further, the respective second ends of the at least two link arms are pivotably and translatably connected to respective arm ends of the two translatable arms.

An arm of an actuatable module, may be of any form or shape. For instance, the arm of the actuatable module may be substantially rectangular, triangular, or circular rod. A link arm may comprise layers for reinforced mechanical stability. The arm of the actuatable moduel may be made of at least one of carbon fiber composite, steel, Aluminium Alloys, etc for improved mechanical properties such as stiffness, strength, toughness, shear modulus, etc.

An arm of an actuatable module may comprise or be a part of the module that moves along a lateral direction when the actuatable module is operated. An arm end of a translatable arm may refer to a part or portion of the translatable arm comprising a physical end point of the translatable arm, i.e., the farthest point along an axis through the translatable arm from a center point on the axis. For instance, the translatable arm may be cylindrically shaped with an axial axis running through a base of the translatable arm, in which case an end is an intersection between the axial axis and the base. The portion or part may start from the end point of the translatable arm and stretch to the other end of the translatable arm, e.g., in a continuous manner along the axis through the translatable arm and/or in a homogenous manner through the plane having a normal being a tangent to the axis. A translatable arm may be arbitrarily divided into at least two portions with a first portion of the at least two portions comprising one end point of the translatable arm and a second portion of the at least two portions comprising the other end point of the translatable arm. The first and second portions may be referred to as ends of a translatable arm. The respective second ends of the at least two link arms are pivotably connected to respective arm ends of the two translatable arms, when the respective second ends of the at least two link arms are rotatable relative to the respective arm ends of the two translatable arms about a pivoting axis. Alternatively or additionally, the respective second ends of the at least two link arms are translatably connected to respective arm ends of the two translatable arms, when a lateral translation of arm ends of the two translatable arms results in a lateral translation of the respective second ends of the at least two link arms. The two translatable arms may be translatable and translated in the opposite direction simultaneously by the same distance. Such translation may be performed using two separate translation mechanisms or alternatively, using a single translation mechanism. The at least one actuatable module may be operated either manually or electrically. The support assembly according to the example above may advantageously convert a lateral translation into a rotation, which is in turn converted into a relative displacement between the base component and the seat support part of the support assembly, while being compactly packaged.

In an example, specifically in case the base component and the seat support part are coupled by the at least two link arms according to the first way, the seat support part further comprises a lateral rail mechanism comprising a lateral base rail extending in the lateral direction of the seat and attachable to the leg support base of the seat. Respective pivot coupling pins, pivotably and translatably connecting the respective second ends of the at least two link arms and the respective arm ends of the two translatable arms, are slidably supported on the lateral base rail.

The lateral base rail may be attached to the leg support base of the seat such that the lateral base rail extends in the lateral direction of the seat. The lateral base rail may extend along an axis perpendicular to the first and second axes, about which the respective first and second ends of the at least two link arms are pivoting.

The lateral base rail may guide the pivot coupling pins to slide or move along the lateral base rail in the lateral direction while limiting the movement of the pivot coupling pins in other directions such as vertical and longitudinal directions. For this purpose, the lateral base rail may comprise parts preventing the movement of the pivot coupling pins in the directions other than the lateral direction. For instance, such parts may comprise or be grooves, recess, walls, boundaries, curved sections, and others. Accordingly, the support assembly according to the example above may advantageously achieve, among others, providing a particularly smooth mechanical conversion, specifically from a lateral movement of the arms to the vertical relative displacement between the seat support part and the base component via the pivoting movements of the link arms.

In an example, specifically in case the base component and the seat support part are coupled by the at least two link arms according to the first way, the at least one actuatable module is a linear actuator.

The linear actuator may, upon actuation, exhibit a linear motion along the longitudinal direction of the seat. The linear actuator may be actuated manually or electrically. The linear actuator may comprise or be an electric actuator, a hydraulic actuator, a pneumatic actuator, a mechanical actuator, or a magnetic actuator. The linear actuator may comprise or be a servo actuator, a stepper actuator, a bell screw actuator, a lead screw actuator, a belt-driven actuator, a single-acting cylinder, a double-acting cylinder, a telescopic cylinder, a differential cylinder, a rodless cylinder, a diaphragm actuator, a rack and pinon actuator, a cam actuator, a scotch yoke actuator, or a voice coil actuator. The linear motion of a linear actuator along a single axis reduces the radius of actuation, rendering the linear actuator to be compactly packaged into a smaller space. Accordingly, the support assembly according to the example above may advantageously achieve, among others, a specifically improved packing efficiency.

In an example, specifically in case the base component and the seat support part are coupled by the at least two link arms according to the second way, the seat support part comprises a first rail mechanism comprising a first base rail attachable to the leg support base of the seat and a first movable rail slidably supported on the first base rail. The seat support part further comprises a second rail mechanism comprising a second base rail attachable to the leg support base of the seat and a second movable rail slidably supported on the second base rail. The second base rail extends in parallel to the first base rail. Also, the second movable rail extends in parallel to the first movable rail. Further, the respective first ends of the at least two link arms are pivotably connected to the first movable rail and the second movable rail, respectively.

The seat support part of the support assembly may be attached to the seat such that the first base rail extends in parallel to the longitudinal direction of the seat, and/or the second base rail extends in parallel to the longitudinal direction of the seat. Additionally or alternatively, the base component of the support assembly may be mounted on the vehicle structure such that the first base rail extends in parallel to the longitudinal direction of the vehicle, and/or the second base rail extends in parallel to the longitudinal direction of the vehicle. Additionally or alternatively, the first and second movable rails may be slidable, or slidably movable, along the respective first and second base rails. When the first and second base rails are mounted to the vehicle structured such that the longitudinal direction of the first and second base rails is aligned with the longitudinal direction of the vehicle, the base component allows a forward or backward translation of the seat support part along the longitudinal direction of the vehicle. Additionally or alternatively, the respective first ends of the at least two arms pivotably connected to the first and second movable rails, where the rotational axis of such pivot points extend parallel to the longitudinal direction of the seat, specifically enables the link arms to be compactly packaged between the base component and the seat support part, whilst allowing a relative displacement between the seat support part and the base component. Additionally or alternatively, the rotational axis aligned in parallel to the axis along which the relative displacement occurs may advantageously reduce the dependence between the rotational movement and the relative displacement.

In an example, specifically in case the base component and the seat support part are coupled by the at least two link arms according to the second way, the seat support part further comprises a lateral support beam extending in the lateral direction of the seat. The respective ends of the lateral support beam are fastened to the first movable rail and the second movable rail, respectively.

The lateral support beam may be of any form or shape. For instance, the lateral support beam may be substantially rectangular, triangular, or circular rod. The lateral support beam may comprise layers for reinforced mechanical stability. The lateral support beam may be made of at least one of carbon fiber composite, steel, Aluminium Alloys, etc for improved mechanical properties such as stiffness, strength, toughness, shear modulus, etc.

A beam may also be referred to as a brace, a support, a shaft, a plank, a piece, or others. The respective ends of the lateral support beam may alternatively be fastened to first and second pivoting bolt, or rod, used to pivotably connect the respective first ends of the at least two link arms to the first and second moving rails, respectively. Such lateral supporting beam may provide mechanical support in the lateral direction to which the at least two link arms are pivotably connected, thereby providing mechanical stability and reducing a rotational friction experienced during the pivoting caused by otherwise potentially non-negligible rotational movement of the first and second moving rails. Thus, the seat support assembly according to the example above may advantageously achieve, among others, improving mechanical stability in the lateral direction of the seat.

In an example, specifically in case the base component and the seat support part are coupled by the at least two link arms according to the second way, the base component further comprises at least one actuatable module comprising two translatable arms with respective arm ends. The two translatable arms are translatable in the lateral direction of the seat. Also, the at least one actuatable module is mountable on the vehicle structure. Further, the respective second ends of the at least two link arms are pivotably and translatably connected to respective arm ends of the two translatable arms.

An arm of an actuatable module, may be of any form or shape. For instance, the arm of the actuatable module may be substantially rectangular, triangular, or circular rod. A link arm may comprise layers for reinforced mechanical stability. The arm of the actuatable moduel may be made of at least one of carbon fiber composite, steel, Aluminium Alloys, etc for improved mechanical properties such as stiffness, strength, toughness, shear modulus, etc.

An arm of a actuatable module may comprise or be a part of the module that moves along a lateral direction when the actuatable module is operated. An arm end of a translatable arm may refer to a part or portion of the translatable arm comprising a physical end point of the translatable arm, i.e., the farthest point along an axis through the translatable arm from a center point on the axis. For instance, the translatable arm may be cylindrically shaped with an axial axis running through a base of the translatable arm, in which case an end is an intersection between the axial axis and the base. The portion or part may start from the end point of the translatable arm and stretch to the other end of the translatable arm, e.g., in a continuous manner along the axis through the translatable arm and/or in a homogenous manner through the plane having a normal being a tangent to the axis. A translatable arm may be arbitrarily divided into at least two portions with a first portion of the at least two portions comprising one end point of the translatable arm and a second portion of the at least two portions comprising the other end point of the translatable arm. The first and second portions may be referred to as ends of a translatable arm. The respective second ends of the at least two link arms are pivotably connected to respective arm ends of the two translatable arms, when the respective second ends of the at least two link arms are rotatable relative to the respective arm ends of the two translatable arms about a pivoting axis. Alternatively or additionally, the respective second ends of the at least two link arms are translatably connected to respective arm ends of the two translatable arms, when a lateral translation of arm ends of the two translatable arms results in a lateral translation of the respective second ends of the at least two link arms. The two translatable arms may be translatable and translated in the opposite direction simultaneously by the same distance. Such translation may be performed using two separate translation mechanisms or alternatively, using a single translation mechanism. The at least one actuatable module may be operated either manually or electrically. The support assembly according to the example above may advantageously convert a lateral translation into a rotation, which is in turn converted into a relative displacement between the base component and the seat support part of the support assembly, while being compactly packaged.

In an example, specifically in case the base component and the seat support part are coupled by the at least two link arms according to the second way, the base component further comprises a lateral rail mechanism comprising a lateral base rail extending in the lateral direction of the seat and mountable on the vehicle structure. Respective pivot coupling pins, pivotably and translatably connecting the respective second ends of the at least two link arms and the respective arm ends of the two translatable arms, are slidably supported on the lateral base rail.

The lateral base rail may be attached to the leg support base of the seat such that the lateral base rail extends in the lateral direction of the seat. The lateral base rail may extend along an axis perpendicular to the first and second axes, about which the respective first and second ends of the at least two link arms are pivoting.

The lateral base rail may guide the pivot coupling pins to slide or move along the lateral base rail in the lateral direction while limiting the movement of the pivot coupling pins in other directions such as vertical and longitudinal directions. For this purpose, the lateral base rail may comprise parts preventing the movement of the pivot coupling pins in the directions other than the lateral direction. For instance, such parts may comprise or be grooves, recess, walls, boundaries, curved sections, and others. Accordingly, the support assembly according to the example above may advantageously achieve, among others, providing a particularly smooth mechanical conversion, specifically from a lateral movement of the arms to the vertical relative displacement between the seat support part and the base component via the pivoting movements of the link arms.

In an example, specifically in case the base component and the seat support part are coupled by the at least two link arms according to the second way, the at least one actuatable module is a linear actuator.

The linear actuator may, upon actuation, exhibit a linear motion along the longitudinal direction of the seat. The linear actuator may be actuated manually or electrically. The linear actuator may comprise or be an electric actuator, a hydraulic actuator, a pneumatic actuator, a mechanical actuator, or a magnetic actuator. The linear actuator may comprise or be a servo actuator, a stepper actuator, a bell screw actuator, a lead screw actuator, a belt-driven actuator, a single-acting cylinder, a double-acting cylinder, a telescopic cylinder, a differential cylinder, a rodless cylinder, a diaphragm actuator, a rack and pinon actuator, a cam actuator, a scotch yoke actuator, or a voice coil actuator. The linear motion of a linear actuator along a single axis reduces the radius of actuation, rendering the linear actuator to be compactly packaged into a smaller space. Accordingly, the support assembly according to the example above may advantageously achieve, among others, a specifically improved packing efficiency.

In an example, regardless of whether the base component and the seat support part are coupled by the at least two link arms according to the first way or second way, a distance between respective first ends of at least two link arms is greater than or equal to a translatably maximum distance between the respective second ends of the at least two link arms. Alternatively, regardless of whether the base component and the seat support part are coupled by the at least two link arms according to the first way or second way, a distance between respective first ends of at least two link arms is smaller than a translatably maximum distance between the respective second ends of the at least two link arms.

A distance between respective first ends of the at least two links, or simply a first distance, may be a distance between the respective first axes about which the respective first ends of the at least two link arms rotate. Similarly, a distance between respective two ends the respective second ends of the at least two link arms, or simply a second distance, may be distance between the respective second axes about which the respective second ends of the at least two link arms rotate. The distance between the respective second ends may vary with the lateral translation of the arms of the actuatable module. The maximum second distance may be defined by the size of the coupling pins and the laterally extending base rail supporting such coupling pins. Considering a relatively different distances between the first and second distances may advantageously improve the loading conditions, and by extension the required physical properties of the mechanically supporting parts such as laterally supporting beam. For instance, the base component is assumed to be coupled to the seat support part via the at least two link arms in the first way. In such case, when the first distance is greater than or equal to the second distance, the seat assembly may form a trapezoidal shape seen from a point on a longitudinal axis of the seat, the mechanical load onto the slidably moving rails may comprise a component in the laterally outwards direction. Such shape, and the load may advantageously provide a mechanically stability. Still assuming that the base component is coupled to the seat support part via the at least two link arms in the first way, but when the first distance is smaller than the second distance, thereby forming an inverted trapezoidal shape seen from a point on a longitudinal axis of the seat, the mechanical load onto the slidably moving rails may comprise a component in the laterally inwards direction. In such case, a laterally supporting beam placed between the respective sliding moving rails may be advantageous counter such loading component naturally and stably. Accordingly, the support assembly according to the example above may advantageously provide an improved mechanical stability.

According to a second aspect, there is provided a seat assembly in a vehicle. The seat assembly comprises the support assembly according to any one of the examples of the first aspect of the present disclosure. The seat assembly comprises a seat. The seat support part of the support assembly is attached to a leg support base of the seat.

The support assembly according to the first aspect of the present disclosure orients the axes of the rotation of the link arms along the longitudinal direction of the seat. Such orientation enables the link arms to be advantageously positioned between the base component and the seat support part, thereby improving the packaging efficiency of the support assembly. When such support assembly is attached to the seat according to the second aspect of the present disclosure, and such seat assembly is to be packaged into a vehicle, such improved packaging efficiency of the seat assembly may in turn advantageously simplify the assembly process including the loading of the seat assembly into the vehicle. Further, improved packing efficiency may advantageously allow the door opening to be lower for fitting the seat assembly in the vehicle, which in turn may advantageously reduce the height of a ceiling of the vehicle, which in turn improves the aerodynamics leading to a reduced fuel consumption of the vehicle.

According to a third aspect, there is provided a vehicle comprising the seat assembly according to the second aspect of the present disclosure. The base component of the support assembly is mounted on a vehicle structure.

The support assembly according to the first aspect of the present disclosure orients the axes of the rotation of the link arms along the longitudinal direction of the seat. Such orientation enables the link arms to be advantageously positioned between the base component and the seat support part, thereby improving the packaging efficiency of the support assembly. When such support assembly is attached to the seat according to the second aspect of the present disclosure, and such seat assembly is to be packaged into a vehicle according to the third aspect of the present disclosure, such improved packaging efficiency of the seat assembly may in turn advantageously simplify the assembly process including the loading of the seat assembly into the vehicle. Further, improved packing efficiency may advantageously allow the door opening to be lower for fitting the seat assembly in the vehicle, which in turn may advantageously reduce the height of a ceiling of the vehicle, which in turn improves the aerodynamics leading to a reduced fuel consumption of the vehicle.

According to a fourth aspect, there is provided a method for adjusting a height of the seat in the vehicle according to the third aspect of the present disclosure. The method comprises pivoting the at least two link arms of the support assembly, thereby adjusting the height of the seat in the vehicle.

The support assembly according to the first aspect of the present disclosure orients the axes of the rotation of the link arms along the longitudinal direction of the seat. Such orientation enables the link arms to be advantageously positioned between the base component and the seat support part, thereby improving the packaging efficiency of the support assembly. When such support assembly is attached to the seat according to the second aspect of the present disclosure, and such seat assembly is to be packaged into a vehicle according to the third aspect of the present disclosure, such improved packaging efficiency of the seat assembly may in turn advantageously simplify the assembly process, e.g., the method according to the fourth aspect, including the loading of the seat assembly into the vehicle. Further, improved packing efficiency may advantageously allow the door opening to be lower for fitting the seat assembly in the vehicle, which in turn may advantageously reduce the height of a ceiling of the vehicle, which in turn improves the aerodynamics leading to a reduced fuel consumption of the vehicle.

It should be noted that the above examples may be combined with each other irrespective of the aspect involved. Accordingly, features, effects, and advantages explained in connection with one out of the support assembly according to the present disclosure, the seat assembly according to the present disclosure, the vehicle according to the present disclosure, and the method of the present disclosure also apply to any other one of the support assembly according to the present disclosure, the seat assembly according to the present disclosure, the vehicle according to the present disclosure, and the method of the present disclosure.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a vehicle according to an example of the present disclosure comprising a seat according to an example of the present disclosure and a support assembly according to an example of the present disclosure
- Figure 2: illustrates a detailed side view of the support assembly shown in Figure 1
- Figure 3: illustrates a detailed side view of the longitudinally translated support assembly shown in Figure 2
- Figure 4: illustrates a detailed front view of the support assembly shown in Figure 1
- Figure 5: illustrates a detailed front view of the vertically translated support assembly shown in Figure 4
- Figure 6: illustrates a detailed isometric view of a seat assembly comprising the seat as shown in Figure 1 with a support assembly according to an example of the present disclosure attached thereto
- Figure 7: illustrates the seat assembly as shown in Figure 6 with the adjusted height of the seat
- Figure 8: illustrates a method according to an example of the present disclosure

### DETAILED DESCRIPTION

The Figures are merely schematic representations and serve only to illustrate examples of the disclosure. Identical or equivalent elements are in principle provided with the same reference signs.

A vehicle 10 comprises at least one seat for carrying an occupant 13.

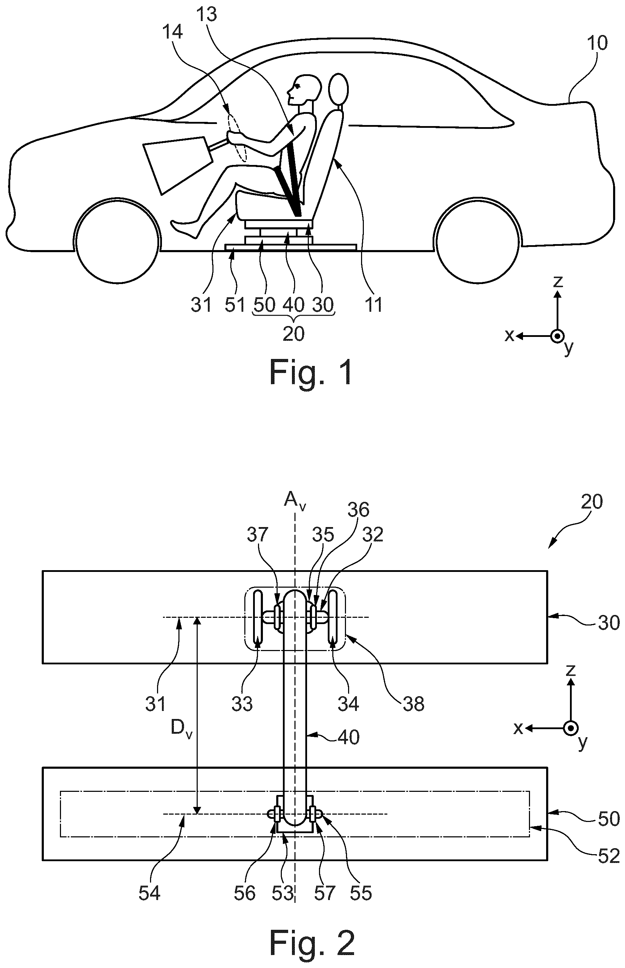

For illustrative purposes, the vehicle 10 shown in Figure 1 illustrates a driver's seat 11 with an occupant 13 sitting therein, and having access to a steering wheel 14 of the vehicle 10.

The occupant 13 is sitting on a leg support base 31 of the seat 11, where the leg support base 31 comprises a seat cushion supported by a seat base skeleton located underneath the seat cushion.

The skeleton is attached to the vehicle 10 via a support assembly 20, which comprises a seat support part 30, two link arms 40, and a base component 50.

The base component 50 is mounted on or to a floor 51 of the vehicle 10, the seat support part 30 is attached to the base skeleton of the seat 11, and the base component 50 and the seat support part 30 are coupled by the two link arms 40.

Such coupling allows seat position adjustment in the forward and backward directions (i.e., along an x-axis in Figure 1) and in the upward and downward directions (i.e., along a z-axis in Figure 1) with respect to the body of the vehicle 10, as further elaborated in reference to the side view of the support assembly 20 shown in Figure 2.

The base component 50 comprises a rail mechanism for aiding a forward and backward translation of the seat 11.

The rail mechanism comprises two parallel base rails extending along the longitudinal direction of the vehicle 10 and separated by a distance in the lateral direction of the vehicle 10.

Seen from the side view of Figure 2, the two base rails overlap, i.e. one base rail is hidden behind the other, thus for conciseness only one of the two base rails are referred to herein and illustrated in Figure 2.

The same applies for further laterally overlapping parts. The base rail 52 supports a sliding rail 53 thereon, such that the sliding rail 53 is movable along the longitudinal direction of the vehicle 10.

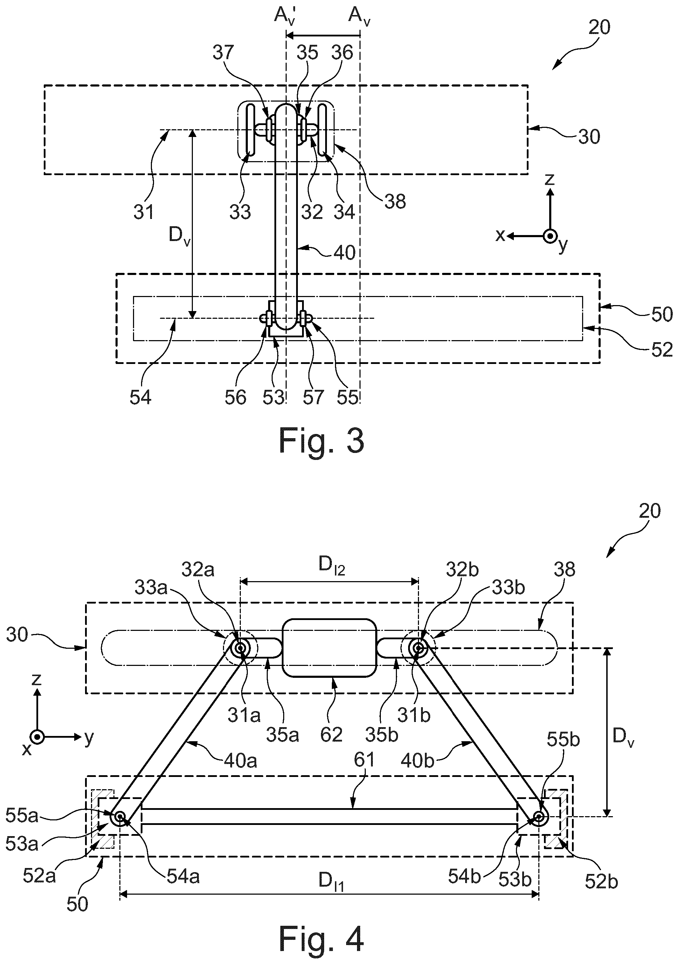

The sliding rail 53 is linked to a first end of the link arm 40, and the other end of the link arm 40, i.e., a second end of the link arm 40, is linked to the seat support part 30. Such connection allows for a relative movement between the base component 50 and the seat support part 30 as shown in Figure 3.

The seat support part 30 is translated by a distance between an initial vertical axis Aᵥ and a displaced vertical axis Aᵥ' with respect to the base component 50, while a vertical distance Dᵥ between the seat support part 30 and the base component 50 remains constant. Since the base component 50 is mounted on the floor of the vehicle 10, and the seat support part 30 is attached to the seat 11, such translation in turn results in moving the seat 11 back and forth along the longitudinal direction of the vehicle 10 with respect to the vehicle 10 body.

Still referring to Figures 2 and 3, the first end of the link arm 40 is pivotably linked to the sliding rail using, e.g., a pivoting bolt 55, such that the link arm 40 is rotatable about a first axis 54 extending in parallel to the longitudinal direction of the vehicle 10.

The first axis 54 runs through a pivoting bolt 55, which runs through two holes 56 and 57 in the sliding rail 53 and a hole in the first end of the link arm 40.

The second end of the link arm 40 is pivotably linked to an end of an arm 35 of an actuatable module fastened to the seat support part 30, such that the second end of the link arm 40 rotates about a second axis 31 extending in parallel to the longitudinal direction of the vehicle 10.

The second axis 31 runs through a coupling pin 32, 33, and 34 pivotably linking the second end of the link arm 40 to the arm of the actuatable module.

The coupling pin 32, 33, and 34 comprises two wheels 33 and 34 freely rotatable with respect to a coupling rod 32 running through the second end of the link arm 40 and the arm 35 of the actuatable module.

The two wheels 33 and 34 are slidably supported on a rail base 38 extending in a lateral direction of the vehicle 10 and attached to the seat support part 30. As a result, a lateral movement of the arm 35 of the actuatable module causes the coupling pin 32, 33, and 34, and by extension the second axis 31, to move along the rail base 38 extending in the lateral direction.

The movement of the coupling pin 32, 33, and 34 in the vertical and longitudinal direction of the vehicle 10 is limited. Further, as the first end of the link arm 40 is pivotably linked about the first axis 31, but the movement thereof is limited in the lateral direction of the vehicle 10, the lateral movement of the arm 35 of the actuatable module is converted to a rotation about the second axis 31, which in turn is converted to a relative vertical movement between the base component 30 and the seat support part 50. Such conversion of movement is further discussed in connection to the front view of the support assembly 20 as shown in Figure 4.

In reference to Figure 4, the two base rails 52a and 52b and the two link arms 40a and 40b do not overlap, thus are explained separately.

The base component 50 comprises a first base rail 52a laterally separated from a second base rail 52b by a lateral distance.

The first base rail 52a extends along the longitudinal direction of the vehicle 10 and the second base rail 52b is in parallel to the first base rail 52a.

The first and second base rails 52a and 52b support respective first and second sliding rails 53a and 53b thereon, which enables the first and second sliding rails 53a and 53b to move along the longitudinal axis of the vehicle 10.

Respective ends of a laterally supporting beam 61, where the laterally supporting beam 61 extends laterally along the lateral axis of the vehicle 10, are coupled to the first base rail 53a and the second base rail 53b, respectively. The supporting beam 61 provides mechanical support to the first and second sliding rails 53a and 53b in the lateral direction.

A first end of the first link arm 40a is pivotably linked to the first sliding rail 53a using a first pivoting bolt 55a, such that the first link arm 40a is rotatable about a first axis 54a extending in parallel to the longitudinal direction of the vehicle 10.

The first axis 54a runs through a first pivoting bolt 55a, which runs through two holes in the first sliding rail 53a and a hole in the first end of the first link arm 40a.

Similarly, a first end of the second link arm 40b is pivotably linked to the second sliding rail 53b using a second pivoting bolt 55b, such that the second link arm 40b is rotatable about a first axis 54b extending in parallel to the longitudinal direction of the vehicle 10.

The first axis 54b runs through the second pivoting bolt 55b, which runs through two holes in the second sliding rail 53b and a hole in the first end of the second link arm 40b.

A second end of the first link arm 40a is pivotably linked to an end of first arm 35a of a actuatable module 62 fastened to the seat support part 30, such that the second end of the first link arm 40a rotates about a second axis 31a extending in parallel to the longitudinal direction of the vehicle 10.

The second axis 31a runs through a first coupling pin 32a and 33a pivotably linking the second end of the first link arm 40a to the first arm 35a of the actuatable module 62.

The first coupling pin 32a and 33a comprises two wheels 33a (and the second wheel is omitted in Figure 4) freely rotatable with respect to a first coupling rod 32a running through the second end of the first link arm 40a and the first arm 35a of the actuatable module 62.

The two wheels 33a are slidably supported on a rail base 38 extending in a lateral direction of the vehicle 10 and attached to the seat support base 30.

Similarly, a second end of the second link arm 40b is pivotably linked to an end of second arm 35b of a actuatable module 62 fastened to the seat support part 30, such that the second end of the second link arm 40b rotates about a second axis 31b extending in parallel to the longitudinal direction of the vehicle 10.

The second axis 31b runs through a second coupling pin 32b and 33b pivotably linking the second end of the second link arm 40b to the second arm 35b of the actuatable module 62.

The second coupling pin 32b and 33b comprises two wheels 33b (and the second wheel omitted in Figure 4) freely rotatable with respect to a second coupling rod 32b running through the second end of the second link arm 40b and the second arm 35b of the actuatable module 62.

The two wheels 33b are slidably supported on a rail base 38 extending in a lateral direction of the vehicle 10 and attached to the seat support base 30. As a result, a lateral movement of the first and second arms 35a and 35b of the actuatable module 62 causes the first and second coupling pins, and by extension the respective second axes 31a and 31b running therethrough, to move along the rail base 38 extending in the lateral direction.

The movement of the first and second coupling pins in the vertical and longitudinal direction of the vehicle 10 is limited. Further, as the respective first ends of the first and second link arms 40a and 40b are pivotably linked about the first axes 54a and 54b, but the movement thereof is limited in the lateral direction of the vehicle 10, the lateral movement of the arms 35a and 35b of the actuatable module 62 is converted to a rotation about the second axes, which in turn is converted to a relative vertical movement between the base component 50 and the seat support part 30.

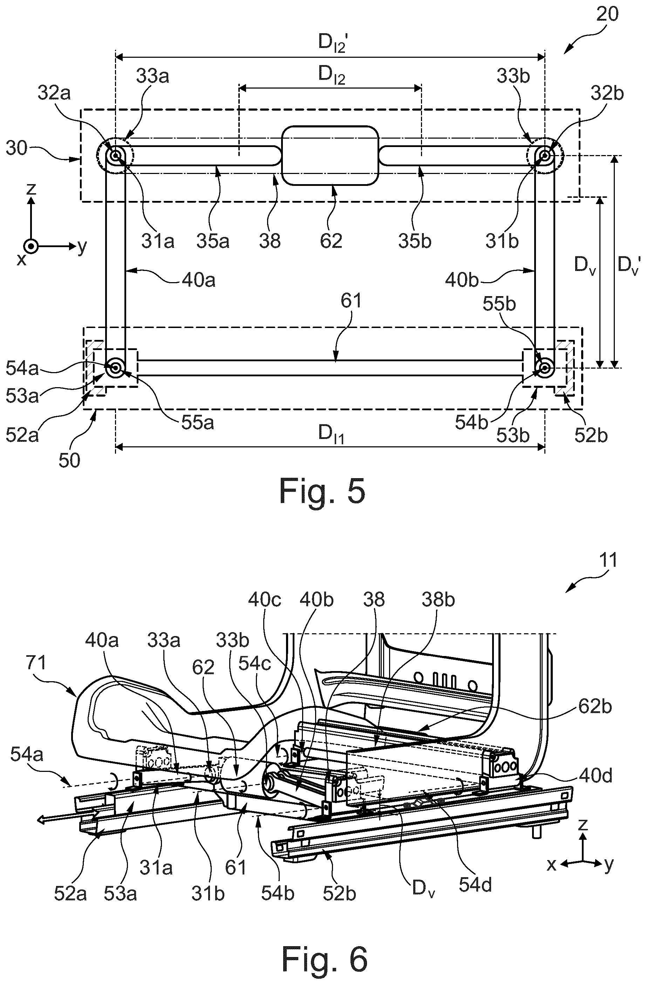

The conversion of the movements is further elaborated in reference to Figure 5.

In reference to Figure 5, as the arms 35a and 35b of the actuatable module 62 extend outwards away from the body of the actuatable module 62 from a first state to a second state, the distance between the two second axes is increased from an initial lateral distance D₁₂ to a displaced lateral distance D₁₂'.

As the respective first ends of the first and second link arms 40a and 40b are pivotably fixed, but the movement thereof are limited laterally, the lateral translation of the arms 35a and 35b of the actuatable module is converted into the rotational movement of the first and second arms 35a and 35b about the respective second axes 31a and 31b.

Further, as the base rail 38 limits the movement of the first and second coupling pins in the longitudinal and vertical directions of the vehicle 10, the rotational movement of the first and second link arms 40a and 40b results in a vertical translation. This is evident from Figure 5, where the distance between first and second axes 54b and 31b of the second arm is increased from an initial vertical distance Dᵥ to a displaced vertical distance Dᵥ'. Such a relative vertical displacement between the seat support part 30 and the base component 50 is performed independently from the relative longitudinal displacement therebetween.

The support assembly 20 can comprise further link arms, or pairs of link arms, 40c and 40d so as to further enhance the mechanical stability, as shown in Figure 6.

The seat 11 in Figure 6 comprises a leg support base 71 attached to the seat support part 20 of the support assembly 30 of Figures 2 to 5 with additional components.

Specifically, the support assembly in Figure 6 further comprises a third link arm 40c pivotably linked to the first sliding rail 53a in the same way as the first link arm 40a is pivotably linked to the first sliding rail 53a.

The third link arm 40c is arranged in parallel to the first link arm 40a and at a distance from the first link arm 40a in the longitudinal direction of the vehicle 10.

The support assembly 30 comprises a fourth link arm 40d pivotably linked to the second sliding rail 53b in the same way as the second link arm 40b is pivotably linked to the second sliding rail 53b.

The fourth link arm 40d is arranged in parallel to the second link arm 40b and is arranged at a distance from the second link arm 40b in the longitudinal direction of the vehicle 10.

The lateral support beam 61 connects the first sliding rail 53a to the second sliding rail 53b and is located between the first and third link arms 40a and 40c in the longitudinal direction.

The respective second ends of the third and fourth link arms 40c and 40d are pivotably and transltably connected to respective ends of the first and second arm of a second actuatable module 62b further comprised in the support assembly shown in Figure 6, in the same way as the respective second ends of the first and second link arms 40a and 40b are pivotably and transltably connected to the respective ends of the first and second arm 35a and 35b of the first actuatable module 62.

The second actuatable module 62b is fastened to the seat support part 30 and the first and second arms (omitted in Figure 6) thereof are movable in the lateral direction of the vehicle 10.

Coupling pins coupling the second ends of the third and fourth arms 40c and 40d to the respective arms of the second actuatable module 62b travel along a second base rail 38b fastened to the seat support part 30 and extending in the lateral direction of the vehicle 10. For simplicity, the details of such coupling pins and the rails are omitted in Figures 6.

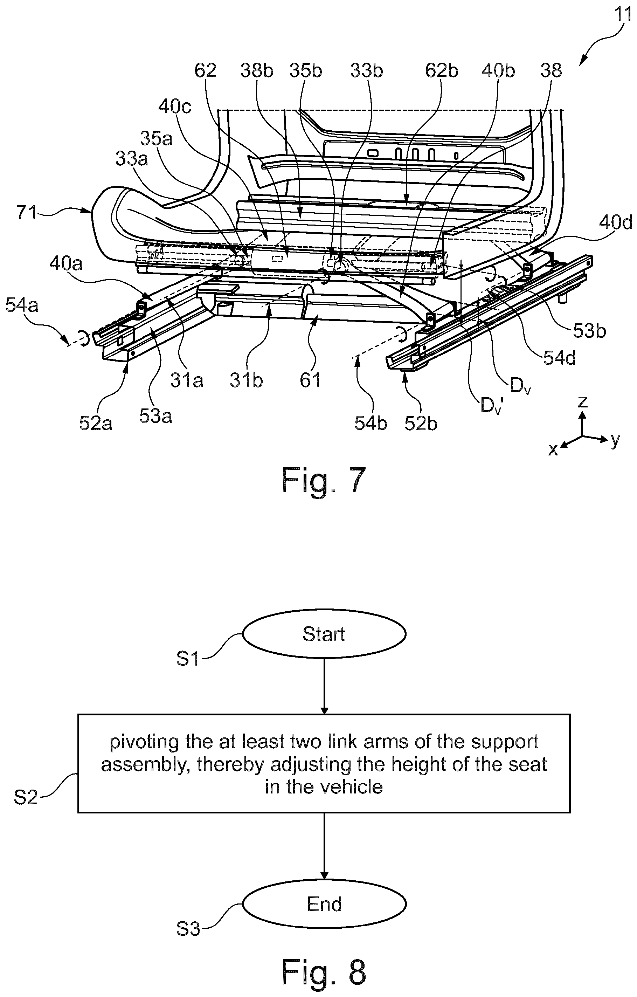

The seat 11 in Figure 6 is in a first vertical position with an initial vertical distance Dᵥ between the first and second axes 54b and 31b. Once the arms of the first and second actuatable modules 62 and 62b extend laterally, the second ends of the link arms 40a, 40b, 40c, and 40d move laterally and pivot about the second axes 31a and 31b, and the first ends of the link arms 40a, 40b, 40c, and 40d pivot about the first axes, resulting in a vertical translation into a second vertical position with a displaced vertical distance Dᵥ' between the first and second axes 31a and 31b as shown in Figure 7. The displaced vertical distance Dᵥ' is greater than the initial vertical distance Dᵥ.

The vertical seat position may initially be the second vertical position as shown in Figure 7, in which case by retracting the arms of the first and second actuatable modules, the vertical seat position arrive to the first vertical position as shown in Figure 6.

Figure 8 shows a method for adjusting a height of the seat 11 in a vehicle 10.

The method starts at S1.

At S2, the method comprises pivoting the at least two link arms 40a, 40b, 40c, 40d of the support assembly 20, thereby adjusting the height of the seat in the vehicle.

At S3, the method ends.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: Vehicle
- 11: Seat
- 13: Occupant
- 14: Steering wheel
- 20: Support assembly
- 30: Seat support part
- 31: Second axis
- 31a: Second axis of the first arm
- 31b: Second axis of the second arm
- 32: Coupling rod
- 32a: First coupling rod
- 32b: Second coupling rod
- 33: First coupling wheel
- 33a: First coupling wheel of the first arm
- 33b: First coupling wheel of the second arm
- 34: Second coupling wheel
- 35: Coupling arm
- 35a: First coupling arm
- 35b: Second coupling arm
- 36: First hole
- 37: Second hole
- 38: Lateral base rail
- 40: Link arm
- 40a: First link arm
- 40b: Second link arm
- 40c: Third link arm
- 40d: Fourth link arm

- 50: Base component
- 52: Longitudinal base rail
- 52a: First longitudinal base rail
- 52b: Second longitudinal base rail
- 53: Longitudinal sliding rail
- 53a: First longitudinal sliding rail
- 53b: Second longitudinal sliding rail
- 54: First axis
- 54a: First axis of the first arm
- 54b: First axis of the second arm
- 54c: First axis of the third arm
- 54d: First axis of the fourth arm
- 55: Pivoting bolt
- 55a: First pivoting bolt
- 55b: Second pivoting bolt
- 56: First hole
- 57: Second hole
- 61: Lateral support beam
- 62: Actuatable module
- 70: Seat assembly
- Aᵥ: Initial axial axis
- Aᵥ': Displaced axial axis
- Dᵥ: Initial vertical distance
- Dᵥ': Displaced vertical distance
- Dₗ₁: Initial first lateral distance
- Dₗ₂: Initial second lateral distance
- Dₗ₂': Displaced second lateral distance
- S1: Start

- S2: First step
- S3: End

## Claims

1. A support assembly (20) for a seat in a vehicle (10), the support assembly (20) comprising:
- a base component (50) mountable on a vehicle structure (51); and
- a seat support part (30) attachable to a leg support base (31) of the seat (11), wherein the base component (50) and the seat support part (30) are coupled by at least two link arms (40a, 40b, 40c, 40d),
wherein respective first ends of the at least two link arms (40a, 40b, 40c, 40d) are pivotably connected to the base component (50), wherein the respective first ends are pivotable about a first axis (54a, 54b, 54c, 54d) extending in parallel to a longitudinal direction of the seat (11), and respective second ends are pivotably and translatably connected to the seat support part (30), wherein the respective second ends are pivotable about a second axis (54a, 54b, 54c, 54d) extending in parallel to a longitudinal direction of the seat (11) and translatable along a direction parallel to a lateral direction of the seat (11), such that a distance between the base component (50) and the seat support part (30) is adjustable by pivoting the at least two link arms (40a, 40b, 40c, 40d), or
wherein respective first ends of the at least two link arms (40a, 40b, 40c, 40d) are pivotably connected to the seat support part (30), wherein the respective first ends are pivotable about a first axis (54a, 54b, 54c, 54d) extending in parallel to a longitudinal direction of the seat (11), and respective second ends are pivotably and translatably connected to the base component (50), wherein the respective second ends are pivotable about a second axis (54a, 54b, 54c, 54d) extending in parallel to a longitudinal direction of the seat (11) and translatable along a direction parallel to a lateral direction of the seat (11), such that a distance between the base component (50) and the seat support part (30) is adjustable by pivoting the at least two link arms (40a, 40b, 40c, 40d).

2. The support assembly (20) of claim 1, wherein the base component (50) comprises:
- a first rail mechanism comprising a first base rail (52a) mountable on the vehicle structure (51) and a first movable rail (53a) slidably supported on the first base rail (52a); and
- a second rail mechanism comprising a second base rail (52b) mountable on the vehicle structure (51) and a second movable rail (53b) slidably supported on the second base rail (52b),
wherein the second base rail (52b) extends in parallel to the first base rail (52a),
wherein the second movable rail (53b) extends in parallel to the first movable rail (53a), and
wherein the respective first ends of the at least two link arms (40a, 40b, 40c, 40d) are pivotably connected to the first movable rail (53a) and the second movable rail (53b), respectively.

3. The support assembly (20) of claim 2, wherein the base component (50) further comprises:
- a lateral support beam (61) extending in the lateral direction of the seat (11),
wherein the respective ends of the lateral support beam (61) are fastened to the first movable rail (53a) and the second movable rail (53b), respectively.

4. The support assembly (20) of any one of the preceding claims, wherein the seat support part (30) further comprises:
- at least one actuatable module (62) comprising two translatable arms (35a, 35b) with respective arm ends,
wherein the two translatable arms (35a, 35b) are translatable in the lateral direction of the seat (11),
wherein the at least one actuatable module (62) is attachable to the leg support base (31) of the seat (11), and
wherein the respective second ends of the at least two link arms (40a, 40b, 40c, 40d) are pivotably and translatably connected to respective arm ends of the two translatable arms (35a, 35b).

5. The support assembly (20) of claim 4, wherein the seat support part (30) further comprises:
- a lateral rail mechanism comprising a lateral base rail (38, 38b) extending in the lateral direction of the seat (11) and attachable to the leg support base (31) of the seat (11),
wherein respective pivot coupling pins (33a, 33b), pivotably and translatably connecting the respective second ends of the at least two link arms (40a, 40b, 40c, 40d) and the respective arm ends of the two translatable arms (35a, 35b), are slidably supported on the lateral base rail (38, 38b).

6. The support assembly (20) of claim 4 or 5, wherein the at least one actuatable module (62) is a linear actuator.

7. The support assembly (20) of claim 1, wherein the seat support part (30) comprises:
- a first rail mechanism comprising a first base rail (52a) attachable to the leg support base (31) of the seat (11) and a first movable rail (53a) slidably supported on the first base rail (52a); and
- a second rail mechanism comprising a second base rail (52b) attachable to the leg support base (31) of the seat (11) and a second movable rail (53b) slidably supported on the second base rail (52b),
wherein the second base rail (52b) extends in parallel to the first base rail (52a),
wherein the second movable rail (53b) extends in parallel to the first movable rail (53a), and
wherein the respective first ends of the at least two link arms (40a, 40b, 40c, 40d) are pivotably connected to the first movable rail (53a) and the second movable rail (53b), respectively.

8. The support assembly (20) of claim 7, wherein the seat support part (30) further comprises:
- a lateral support beam (61) extending in the lateral direction of the seat (11),
wherein the respective ends of the lateral support beam (61) are fastened to the first movable rail (53a) and the second movable rail (53b), respectively.

9. The support assembly (20) of claim 7 or 8, wherein the base component (50) further comprises:
- at least one actuatable module (62) comprising two translatable arms (35a, 35b) with respective arm ends,
wherein the two translatable arms (35a, 35b) are translatable in the lateral direction of the seat (11),
wherein the at least one actuatable module (62) is mountable on the vehicle structure (51), and
wherein the respective second ends of the at least two link arms (40a, 40b, 40c, 40d) are pivotably and translatably connected to respective arm ends of the two translatable arms (35a, 35b).

10. The support assembly (20) of claim 9, wherein the base component (50) further comprises:
- a lateral rail mechanism comprising a lateral base rail (38, 38b) extending in the lateral direction of the seat (11) and mountable on the vehicle structure (51),
wherein respective pivot coupling pins (33a, 33b), pivotably and translatably connecting the respective second ends of the at least two link arms (40a, 40b, 40c, 40d) and the respective arm ends of the two translatable arms (35a, 35b), are slidably supported on the lateral base rail (38, 38b).

11. The support assembly (20) of claim 9 or 10, wherein the at least one actuatable module (62) is a linear actuator.

12. The support assembly (20) of any one of the preceding claims, wherein a distance between respective first ends of at least two link arms (40a, 40b, 40c, 40d) is greater than or equal to a translatably maximum distance between the respective second ends of the at least two link arms (40a, 40b, 40c, 40d), or wherein a distance between respective first ends of at least two link arms (40a, 40b, 40c, 40d) is smaller than a translatably maximum distance between the respective second ends of the at least two link arms (40a, 40b, 40c, 40d).

13. A seat assembly (70) in a vehicle (10), wherein the seat assembly (70) comprises the support assembly (20) according to any one of claims 1 to 12, wherein the seat assembly (70) comprises a seat (11), and wherein the seat support part (30) of the support assembly (20) is attached to a leg support base (31) of the seat (11).

14. A vehicle (10) comprising the seat assembly (70) according to claim 13, wherein the base component (50) of the support assembly (20) is mounted on a vehicle structure (51).

15. A method for adjusting a height of the seat in the vehicle of claim 14, the method comprising:
pivoting the at least two link arms (40a, 40b, 40c, 40d) of the support assembly (20), thereby adjusting the height of the seat in the vehicle.
